# EUROPEAN PATENT APPLICATION

(11) **EP 4 629 475 A1**
(43) Date of publication of application: **08.10.2025**
(21) Application number: 25166028.8
(22) Date of filing: 25.03.2025
(51) Int. Cl.: H02J 7/00

(54) **BATTERY PARALLEL SYSTEM AND BATTERY PARALLEL-CONNECTION METHOD**

(30) Priority: 29.03.2024 CN 202410383073
(71) Applicant: Xiamen Ampack Technology Limited, Xiamen City, Fujian Province, 361000 (CN)
(72) Inventor: LIU, Xing, Xiamen City, Fujian Province, 361000 (CN); HU, Liang, Xiamen City, Fujian Province, 361000 (CN); YANG, Fei, Xiamen City, Fujian Province,361000 (CN); YIN, Xiaolong, Xiamen City, Fujian Province, 361000 (CN)
(74) Representative: Icosa

(57) **Abstract**

A battery parallel-connection method, the method including: waking up N battery packs; obtaining parameters of the N battery packs, and determining a master battery pack and remaining N-1 slave battery packs from the N battery packs, wherein the parameters of the battery packs comprise one or more of current, voltage, resistance, temperature, or switch status, and the master battery pack comprises a first processor; and determining, by the first processor, whether a to-be-incorporated battery pack and an incorporated battery pack meet a pre-parallel-connection condition, and sending a switch closing instruction to the to-be-incorporated battery pack when it is determined that the to-be-incorporated battery pack and the incorporated battery pack meet the pre-parallel-connection condition, wherein the pre-parallel-connection condition comprises: condition S1: the to-be-incorporated battery pack triggers no fault, and the incorporated battery pack triggers no fault; and condition S2: an absolute value of a difference between an open-circuit voltage of the to-be-incorporated battery pack and an open-circuit voltage of the incorporated battery pack is less than a first voltage threshold; and the open-circuit voltage of the incorporated battery pack is a minimum open-circuit voltage or a maximum open-circuit voltage in a battery parallel system.

## Description

### TECHNICAL FIELD

This application relates to the technical field of battery management, and in particular, to a battery parallel system and a battery parallel-connection method.

### BACKGROUND

Generally, the power of a single battery pack is limited and sometimes fails to meet the needs of an electrical device. In this case, a plurality of battery packs need to be connected in parallel to power the electrical device. The output ends of all battery packs are connected in parallel to combine currents. At this time, a maximum output power of the parallel system is a sum of the maximum output powers of all the battery packs. A parallel system includes a plurality of battery packs.

### SUMMARY

An objective of some embodiments of this application is to provide a battery parallel system and a battery parallel-connection method. Specific technical solutions are as follows:

A first aspect of this application provides a battery parallel system, including: N battery packs. The N battery packs are configured to be woken up in response to a first operation. The first operation includes an operation that triggers wake-up of the N battery packs, where N is a positive integer greater than or equal to 2. Each battery pack includes a communication unit and a processor. Each battery pack is configured to obtain parameters of remaining N-1 battery packs through the communication unit. The parameters of the battery packs include one or more of current, voltage, resistance, temperature, or switch status. The processor and the communication unit are configured to determine a master battery pack and remaining N-1 slave battery packs from the N battery packs. The master battery pack includes a first processor. The first processor is configured to: determine whether a to-be-incorporated battery pack and an incorporated battery pack meet a pre-parallel-connection condition, and send a switch closing instruction to the to-be-incorporated battery pack when it is determined that the to-be-incorporated battery pack and the incorporated battery pack meet the pre-parallel-connection condition. The pre-parallel-connection condition includes: condition S1: the to-be-incorporated battery pack triggers no fault, and the incorporated battery pack triggers no fault; and condition S2: an absolute value of a difference between an open-circuit voltage of the to-be-incorporated battery pack and an open-circuit voltage of the incorporated battery pack is less than a first voltage threshold. The open-circuit voltage of the incorporated battery pack is a minimum open-circuit voltage or a maximum open-circuit voltage in the battery parallel system.

The first processor of the master battery pack determines a battery pack parallel-connection operation based on whether the to-be-incorporated battery pack and the incorporated battery pack trigger no fault, and based on the difference between the open-circuit voltage of the to-be-incorporated battery pack and the open-circuit voltage of the incorporated battery pack. The open-circuit voltage is used as a parallel-connection condition, thereby reducing the impact of the resistance of the battery pack on an actual voltage of the battery pack, and more accurately reflecting an actual voltage difference between the battery packs.

In one or more embodiments of this application, the pre-parallel-connection condition further includes: condition S3: a temperature of the to-be-incorporated battery pack falls within a first temperature range, and a temperature of the incorporated battery pack falls within the first temperature range. The temperature of the to-be-incorporated battery pack is characterized by an extreme temperature of a battery cell in the battery pack, and the temperature of the incorporated battery pack is characterized by an extreme temperature of a battery cell in the battery pack.

The pre-parallel-connection condition additionally includes a temperature condition to ensure that the battery packs undergo the parallel-connection operation within a safe temperature range, thereby improving the safety of the parallel system of the battery packs.

In one or more embodiments of this application, each battery pack includes a charging switch and a discharging switch. The first processor is configured to transmit a discharging switch closing instruction to the to-be-incorporated battery pack in a case that the maximum open-circuit voltage in the battery parallel system is the maximum voltage value of the incorporated battery pack and that the to-be-incorporated battery pack meets the pre-parallel-connection condition. Alternatively, the first processor is configured to transmit a charging switch closing instruction to the to-be-incorporated battery pack in a case that the minimum open-circuit voltage in the battery parallel system is the minimum voltage value of the incorporated battery pack and that the to-be-incorporated battery pack meets the pre-parallel-connection condition.

In one or more embodiments of this application, the first processor is configured to: in a case that the first processor determines that the to-be-incorporated battery pack and the incorporated battery pack fail to meet the pre-parallel-connection condition, the first processor, at intervals of a first period T1, determines whether the to-be-incorporated battery pack meets the pre-parallel-connection condition; or, at intervals of a first period T1, determines whether the to-be-incorporated battery pack and the incorporated battery pack meet the pre-parallel-connection condition.

In one or more embodiments of this application, the first processor is configured to: determine, in a case that the to-be-incorporated battery pack and the incorporated battery pack meet the pre-parallel-connection condition, that whether the to-be-incorporated battery pack and the incorporated battery pack meet a first parallel-connection condition, where the first parallel-connection condition includes: condition A1: a current of the battery parallel system is less than or equal to a first current threshold; the condition S1; and condition A2: an absolute value of a difference between an open-circuit voltage of the to-be-incorporated battery pack and an open-circuit voltage of the incorporated battery pack is less than a second voltage threshold, where the current of the battery parallel system is characterized by a maximum current in the battery parallel system.

In one or more embodiments of this application, the processor of the to-be-incorporated battery pack is configured to control the charging switch to close in a case that the maximum open-circuit voltage in the battery parallel system is the maximum open-circuit voltage value of the incorporated battery pack and that the to-be-incorporated battery pack and the incorporated battery pack meet the pre-parallel-connection condition and the first parallel-connection condition. Alternatively, the processor of the to-be-incorporated battery pack is configured to control the discharging switch to close in a case that the minimum open-circuit voltage in the battery parallel system is the minimum open-circuit voltage of the incorporated battery pack and that the to-be-incorporated battery pack and the incorporated battery pack meet the pre-parallel-connection condition and the first parallel-connection condition.

In one or more embodiments of this application, the first processor is configured to: determine, in a case that the to-be-incorporated battery pack and the incorporated battery pack meet the pre-parallel-connection condition, that whether the to-be-incorporated battery pack and the incorporated battery pack meet a second parallel-connection condition, where the second parallel-connection condition includes: condition B1: a current of the battery parallel system is greater than a first current threshold; condition B2: a current of each of the to-be-incorporated battery packs is greater than a second current threshold; and condition B3: a current difference between the current of the to-be-incorporated battery pack and the current of the battery parallel system is less than or equal to a third current threshold, where the current of the battery parallel system is characterized by a maximum current in the battery parallel system.

In one or more embodiments of this application, the processor of the to-be-incorporated battery pack is configured to control the charging switch to close in a case that the maximum open-circuit voltage in the battery parallel system is the maximum open-circuit voltage value of the incorporated battery pack and that the to-be-incorporated battery pack and the incorporated battery pack meet the pre-parallel-connection condition and the second parallel-connection condition; or, the processor of the to-be-incorporated battery pack is configured to control the discharging switch to close in a case that the minimum open-circuit voltage in the battery parallel system is the minimum open-circuit voltage of the incorporated battery pack and that the to-be-incorporated battery pack and the incorporated battery pack meet the pre-parallel-connection condition and the second parallel-connection condition.

In one or more embodiments of this application, the first processor is configured to: in a case that the first processor determines that the to-be-incorporated battery pack and the incorporated battery pack fail to meet the first parallel-connection condition or the second parallel-connection condition, the first processor, at intervals of a second period T2, determines whether the to-be-incorporated battery pack meets the pre-parallel-connection condition; or, at intervals of a second period T2, determines whether the to-be-incorporated battery pack and the incorporated battery pack meet the pre-parallel-connection condition.

A second aspect of this application provides a battery parallel-connection method. The method includes: waking up N battery packs; obtaining parameters of the N battery packs, and determining a master battery pack and remaining N-1 slave battery packs from the N battery packs, where the parameters of the battery packs include one or more of current, voltage, resistance, temperature, or switch status, and the master battery pack includes a first processor; and determining, by the first processor, whether a to-be-incorporated battery pack and an incorporated battery pack meet a pre-parallel-connection condition, and sending a switch closing instruction to the to-be-incorporated battery pack when it is determined that the to-be-incorporated battery pack and the incorporated battery pack meet the pre-parallel-connection condition. The pre-parallel-connection condition includes: condition S1: the to-be-incorporated battery pack triggers no fault, and the incorporated battery pack triggers no fault; and condition S2: an absolute value of a difference between an open-circuit voltage of the to-be-incorporated battery pack and an open-circuit voltage of the incorporated battery pack is less than a first voltage threshold. The open-circuit voltage of the incorporated battery pack is a minimum open-circuit voltage or a maximum open-circuit voltage in the battery parallel system.

In one or more embodiments of this application, the pre-parallel-connection condition further includes: condition S3: a temperature of the to-be-incorporated battery pack falls within a first temperature range, and a temperature of the incorporated battery pack falls within the first temperature range. The temperature of the to-be-incorporated battery pack is characterized by an extreme temperature of a battery cell in the battery pack, and the temperature of the incorporated battery pack is characterized by an extreme temperature of a battery cell in the battery pack.

In one or more embodiments of this application, each battery pack includes a charging switch and a discharging switch. The sending, by the first processor, a switch closing instruction to the to-be-incorporated battery pack when it is determined that the to-be-incorporated battery pack and the incorporated battery pack meet the pre-parallel-connection condition includes: transmitting, by the first processor, a discharging switch closing instruction to the to-be-incorporated battery pack when the maximum open-circuit voltage in the battery parallel system is the maximum open-circuit voltage value of the incorporated battery pack and when the to-be-incorporated battery pack meets the pre-parallel-connection condition; or, transmitting, by the first processor, a charging switch closing instruction to the to-be-incorporated battery pack when the minimum open-circuit voltage in the battery parallel system is the minimum open-circuit voltage of the incorporated battery pack and when the to-be-incorporated battery pack meets the pre-parallel-connection condition.

In one or more embodiments of this application, the method further includes: in a case the first processor determined that the to-be-incorporated battery pack and the incorporated battery pack fail to meet the pre-parallel-connection condition, the first processor, at intervals of a first period T1, determines whether the to-be-incorporated battery pack meets the pre-parallel-connection condition; or, at intervals of a first period T1, determines whether the to-be-incorporated battery pack and the incorporated battery pack meet the pre-parallel-connection condition.

In one or more embodiments of this application, after the first processor determines that the to-be-incorporated battery pack and the incorporated battery pack meet the pre-parallel-connection condition, the method further includes: determining, by the first processor, that whether the to-be-incorporated battery pack and the incorporated battery pack meet a first parallel-connection condition. The first parallel-connection condition includes: condition A1: a current of the battery parallel system is less than or equal to a first current threshold; the condition S1; and condition A2: an absolute value of a difference between an open-circuit voltage of the to-be-incorporated battery pack and an open-circuit voltage of the incorporated battery pack is less than a second voltage threshold. The current of the battery parallel system is characterized by a maximum current in the battery parallel system.

In one or more embodiments of this application, the method further includes: controlling, by the processor of the to-be-incorporated battery pack, the charging switch to close in a case that the maximum open-circuit voltage in the battery parallel system is the maximum voltage value of the incorporated battery pack and that the to-be-incorporated battery pack and the incorporated battery pack meet the pre-parallel-connection condition and the first parallel-connection condition; or, controlling, by the processor of the to-be-incorporated battery pack, the discharging switch to close in a case that the minimum open-circuit voltage in the battery parallel system is the minimum voltage value of the incorporated battery pack and that the to-be-incorporated battery pack and the incorporated battery pack meet the pre-parallel-connection condition and the first parallel-connection condition.

In one or more embodiments of this application, the sending, by the first processor, a switch closing instruction to the to-be-incorporated battery pack when it is determined that the to-be-incorporated battery pack and the incorporated battery pack meet the pre-parallel-connection condition includes: (i) determining, by the first processor, whether the to-be-incorporated battery pack and the incorporated battery pack meet the pre-parallel-connection condition; (ii) determining, in a case that the to-be-incorporated battery pack and the incorporated battery pack meet the pre-parallel-connection condition, whether the to-be-incorporated battery pack and the incorporated battery pack meet a second parallel-connection condition, where the second parallel-connection condition includes: condition B1: a current of the battery parallel system is greater than a first current threshold; condition B2: a current of each of the to-be-incorporated battery packs is greater than a second current threshold; and condition B3: a current difference between the current of the to-be-incorporated battery pack and the current of the battery parallel system is less than or equal to a third current threshold; and (iii) sending, if the second parallel-connection condition is met, the switch closing instruction to the to-be-incorporated battery pack, where the current of the battery parallel system is characterized by a maximum current in the battery parallel system.

In one or more embodiments of this application, the method further includes: controlling, by the processor of the to-be-incorporated battery pack, the charging switch to close in a case that the maximum open-circuit voltage in the battery parallel system is the maximum voltage value of the incorporated battery pack and that the to-be-incorporated battery pack and the incorporated battery pack meet the pre-parallel-connection condition and the second parallel-connection condition; or, controlling, by the processor of the to-be-incorporated battery pack, the discharging switch to close in a case that the minimum open-circuit voltage in the battery parallel system is the minimum voltage value of the incorporated battery pack and that the to-be-incorporated battery pack and the incorporated battery pack meet the pre-parallel-connection condition and the second parallel-connection condition.

In one or more embodiments of this application, the method further includes: in a case that the first processor determines that the to-be-incorporated battery pack and the incorporated battery pack fail to meet the first parallel-connection condition or the second parallel-connection condition, the first processor, at intervals of a second period T2, determines whether the to-be-incorporated battery pack meets the pre-parallel-connection condition; or, at intervals of a second period T2, determines whether the to-be-incorporated battery pack and the incorporated battery pack meet the pre-parallel-connection condition.

Some embodiments of this application achieve at least the following beneficial effects: This application provides a battery parallel system and a battery parallel-connection method. After a master battery pack and slave battery packs are determined, a first processor of the master battery pack determines a battery pack parallel-connection operation based on whether a to-be-incorporated battery pack and an incorporated battery pack trigger no fault, and based on a difference between an open-circuit voltage of the to-be-incorporated battery pack and an open-circuit voltage of the incorporated battery pack. The open-circuit voltage is used as a parallel-connection condition, thereby reducing impact of a resistance of the battery pack on an actual voltage of the battery pack, more accurately reflecting an actual voltage difference between the battery packs, and improving the safety of parallel-connection operations of batteries.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a schematic electrical diagram of a vehicle system according to an embodiment of this application;
FIG. 2 is a schematic structural diagram of a battery pack according to an embodiment of this application;
FIG. 3 is a first equivalent schematic diagram of a battery pack according to an embodiment of this application;
FIG. 4 is a second equivalent schematic diagram of a battery pack according to an embodiment of this application;
FIG. 5 is a schematic flowchart of a battery parallel system according to an embodiment of this application; and
FIG. 6 is a schematic structural diagram of an electronic device according to an embodiment of this application.

### DETAILED DESCRIPTION

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

To more accurately reflect the actual voltage difference between battery packs and improve the safety of battery parallel-connection, an embodiment of this application provides a battery parallel system.

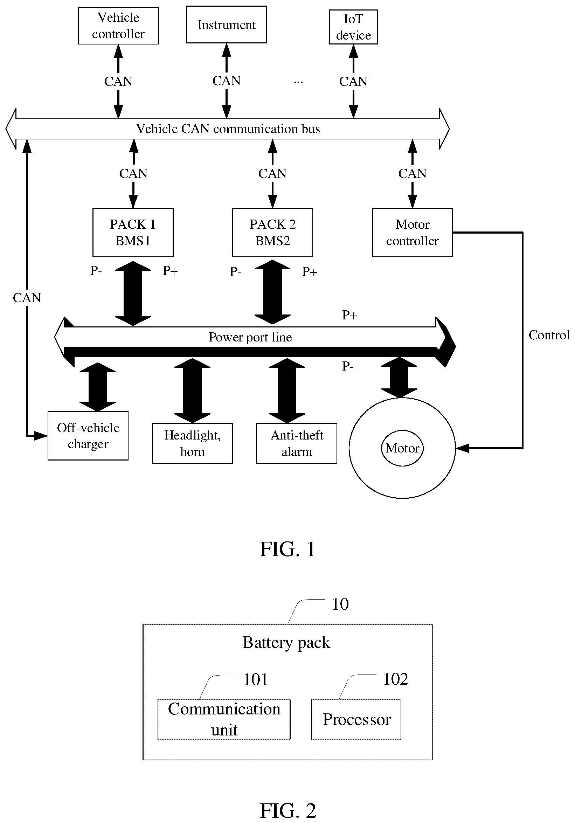

FIG. 1 is a schematic electrical diagram of a vehicle (for example, an electric motorcycle) system. The vehicle includes a vehicle controller, an instrument, an Internet of Things (IoT) device, a battery pack, a motor controller, a motor, an anti-theft alarm, a headlight, a horn, and an off-vehicle charger. The vehicle controller, the instrument, the IoT device, the battery pack (PACK1, PACK2), a battery management system (BMS1, BMS2), and the motor controller communicate based on a vehicle CAN communication bus. The battery pack (PACK1, PACK2) and the battery management system (BMS1, BMS2) may supply power to the anti-theft alarm, the headlight, the horn, and the off-vehicle charger based on a power port line. The battery management system is disposed in the battery pack, and is configured to manage charge and discharge of the battery pack, for example, monitor the voltage, current, temperature, and other parameters of the battery pack. If the battery pack is faulty, the battery management system can report fault information of the battery pack to the vehicle controller, and interrupt the charge or discharge of the battery pack. The vehicle controller may also send a control instruction to the motor controller. The motor controller controls the motor based on the control instruction. In FIG. 1, P+ represents a positive electrode, and P- represents a negative electrode.

The battery pack includes a battery module. The battery module includes a plurality of battery cells. The plurality of battery cells may be connected in series, parallel, or series-and-parallel pattern. The series-and-parallel connection of a plurality of battery cells means that the connection between the battery cells includes both series connection and parallel connection.

Before a battery pack is connected in parallel, the battery pack needs to be woken up first. A first operation that wakes up the battery management system may be applied to the battery pack. The battery management system is woken up in response to the first operation. In some embodiments of this application, the first operation includes: inserting a key into a key port of a vehicle, and performing communication between a battery pack and the vehicle (the vehicle sends a start signal to the battery pack so that the battery pack is woken up); or, receiving, by the battery pack, a charging signal, where the charging signal may be a hardware signal (a hardware signal generated when a charger is plugged into a charging port) or a charging communication signal sent by the charger. Any other operation capable of waking up the battery pack may be the first operation mentioned herein.

As shown in FIG. 2, the battery pack 10 in this application includes a communication unit 101 and a processor 102. In some specific implementations, the communication mode of the communication unit is wired communication, such as RS485 communication or CAN communication. In some other specific implementations, the communication mode of the communication unit is wireless communication such as Wireless Fidelity (WiFi) and Bluetooth communication. The awakened battery packs can communicate with each other. Each battery pack obtains parameters of the remaining N-1 battery packs through the communication unit. The parameters of the battery packs include one or more of current, voltage, resistance, temperature, or switch status. The switch may be a power switch, such as a MOS transistor, a relay, a contactor. The switch status includes: on state, and off state. The battery pack further includes a collection unit configured to obtain the parameters of the battery pack. The collection unit communicates with a processor. For example, the voltage of the battery cell and the battery pack is collected by an Analog Front End (AFE) chip; the current of the battery pack is collected by a shunt resistor; the temperature of the battery cell is collected by a temperature sensor, and so on. The AFE, shunt resistor, and temperature sensor each may be used as the collection unit of the battery pack.

The battery packs communicate with each other through the communication unit. The processor of each battery pack determines a master battery pack and slave battery packs based on a pre-set rule. For example, the master battery pack and the slave battery packs may be determined based on an assigned address of the battery pack. As an example, each battery pack is addressed. After an address is assigned successfully, the battery pack with the smallest address or the largest address is used as a master battery pack, and the other battery packs are slave battery packs.

In a battery parallel system, a plurality of battery packs in the battery parallel system are woken up, and the master battery pack and the slave battery packs are determined by addressing. For a to-be-incorporated battery pack, the master battery pack may obtain the parameters of the to-be-incorporated battery pack and the parameters of the incorporated battery pack, and determine whether the to-be-incorporated battery pack meets a parallel-connection condition.

In some embodiments of this application, the incorporated battery pack is a battery pack that has been connected to the battery parallel system. The to-be-incorporated battery pack is a battery pack that has been woken up but not connected to the battery parallel system. As a specific implementation manner, a plurality of battery packs in the battery parallel system are woken up, and the master battery pack and the slave battery packs are determined. If the battery parallel system is in a charging state, the master battery pack uses the battery pack of the smallest voltage value as an incorporated battery pack. If the battery parallel system is in a non-charging state, the master battery pack uses the battery pack of the largest voltage value as an incorporated battery pack. It is understandable that if the battery parallel system is in a charging state, the master battery pack determines a smallest voltage of the incorporated battery pack, and determines that whether the smallest voltage of the incorporated battery pack and the voltage of the to-be-incorporated battery pack meet the a pre-parallel-connection condition. If the battery parallel system is in a non-charging state, the master battery pack determines a largest voltage of the incorporated battery pack, and determines that whether the largest voltage of the incorporated battery pack and the voltage of the to-be-incorporated battery pack meet the a pre-parallel-connection condition.

In some embodiments of this application, the parallel-connection condition includes a pre-parallel-connection condition. For each to-be-incorporated battery pack, if the to-be-incorporated battery pack fails to meet the pre-parallel-connection condition, the to-be-incorporated battery pack exits the parallel-connection process.

The pre-parallel-connection condition includes condition S1 and condition S2. The condition S1 is that the to-be-incorporated battery pack triggers no fault and the incorporated battery pack triggers no fault. The condition S2 is that an absolute value of a difference between an open-circuit voltage of the to-be-incorporated battery pack and an open-circuit voltage of the incorporated battery pack is less than a first voltage threshold.

Faults triggered by a battery pack include: overcurrent fault, overvoltage fault, undervoltage fault, temperature fault, and switch device fault. The overcurrent fault may occur in a charging process or a discharging process. The overvoltage fault may occur in a charging process. The undervoltage fault may occur in a discharging process. The temperature fault indicates that the temperature of the battery pack is not within the safe temperature range. The switch device faults include: MOSFET sticking (MOSFET is stuck in the closed state and unable to switch to the open state), chip damage, and the like.

The overcurrent fault indicates that the battery pack is in an overcurrent state. The overvoltage fault indicates that the battery pack is in an overvoltage state. The undervoltage fault indicates that the battery pack is in an undervoltage state. The temperature fault indicates that the battery pack is not within the safe temperature range. The switch device fault indicates that the switch device fails. The processor of the battery pack can obtain parameters such as current, voltage, temperature, and switch status, and, based on the current, voltage, temperature, and switch status, determine whether the battery pack triggers a fault. For each battery pack, if any of the above faults occurs, it is determined that the battery pack triggers a fault. If none of the above faults is triggered, the condition S1 is met.

The open-circuit voltage of the battery pack is determined based on a terminal voltage of the battery pack, a direct-current internal resistance of the battery pack, a polarization internal resistance, and a current of the battery pack. The terminal voltage of the battery pack is collected by an Analog Front End (AFE). The open-circuit voltage of the battery pack is calculated based on the direct-current internal resistance, polarization internal resistance, and current of the battery pack.

The open-circuit voltage of the battery pack may be calculated by using the following formula:

V' = V-I × (DCR1 + DCR2), where V is the terminal voltage of the battery pack, DCR1 is the direct-current internal resistance of the battery pack, DCR2 is the polarization internal resistance of the battery pack, I is the current of the battery pack, and V' is the open-circuit voltage of the battery pack. In some embodiments of this application, when the parallel system is in a charging state, I is a positive value; and, when the parallel system is in a discharging state, I is a negative value.

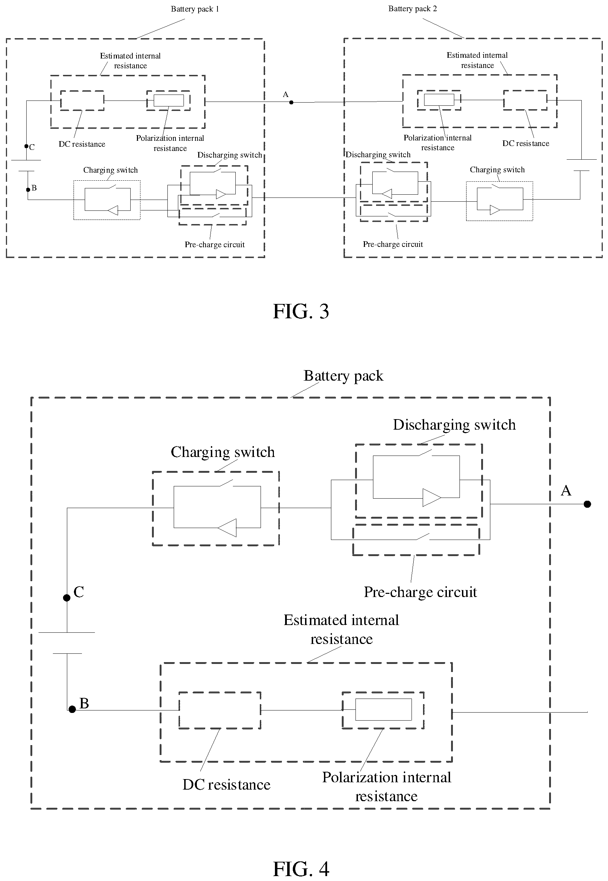

As shown in FIG. 3, FIG. 3 includes a battery pack 1 and a battery pack 2. Both the battery pack 1 and the battery pack 2 are battery packs with negative-side controlled switches. The negative-side controlled switch means that the charging switch, the discharging switch, and the pre-charge circuit of the battery pack are all connected to the negative electrode of the battery pack. The terminal voltage V of the battery pack is the voltage between points A and B. The open-circuit voltage V' of the battery pack is the voltage between points C and B. The open-circuit voltage allows for an estimated internal resistance. The estimated internal resistance includes the direct-current internal resistance DCR1 and the polarization internal resistance DCR2 of the battery pack.

As shown in FIG. 4, FIG. 4 shows a battery pack with a positive-side controlled switch. The positive-side controlled switch means that the charging switch, the discharging switch, and the pre-charge circuit of the battery pack are all connected to the positive electrode of the battery pack. The terminal voltage V of the battery pack is the voltage between points A and B. The open-circuit voltage V' of the battery pack is the voltage between points C and B. The open-circuit voltage allows for an estimated internal resistance. The estimated internal resistance includes the direct-current internal resistance DCR1 and the polarization internal resistance DCR2 of the battery pack.

The absolute value of the difference between the open-circuit voltage of the to-be-incorporated battery pack and the open-circuit voltage of the incorporated battery pack is calculated. If the absolute value is less than a first voltage threshold, the condition S2 is met. The open-circuit voltage of the incorporated battery pack is a minimum open-circuit voltage or a maximum open-circuit voltage in the battery parallel system.

The open-circuit voltage of the battery pack is used as a basis for determining the parallel-connection operation of the battery pack rather than the terminal voltage of the battery pack, thereby allowing for the impact of the resistance of the battery pack on the voltage of the battery pack, and more accurately reflecting an actual voltage difference between the battery packs. This also alleviates the following problems: due to an inaccurate actual voltage difference between the battery packs, the battery packs are unable to meet the parallel-connection condition; when the battery parallel system is in the discharging state, the battery pack switches back and forth for discharging (the battery pack with the highest voltage is discharged first), thereby failing to meet the power boosting requirement of the battery parallel system; and, when the battery parallel system is in the charging state, the battery pack switches back and forth for charging (the battery pack with the lowest voltage is charged first). In addition, this also alleviates the following problems: due to the inaccurate actual voltage difference between the battery packs, after the battery pack is incorrectly connected in parallel, the current distribution of one or more battery packs is uneven due to a large difference in the actual capacity between the battery packs, thereby triggering overcurrent protection; and, after an external load is disconnected, the circulating current between the battery packs exceeds the tolerance of the battery cell, thereby causing irreversible damage to the battery cell.

In some specific implementations of this application, if none of the battery packs triggers a fault and if the battery parallel system is in a charging state, the first processor (the processor of the master battery pack) determines a incorporated battery pack with the smallest voltage, and determines whether the absolute value of the difference between the open-circuit voltage of the to-be-incorporated battery pack and the open-circuit voltage of the incorporated battery pack with the smallest voltage meets the requirement; and, if the requirement is met, sends a charging switch closing instruction to the to-be-incorporated battery pack so that the to-be-incorporated battery pack performs a charging parallel-connection operation.

In some other specific implementations of this application, if none of the battery packs triggers a fault and if the battery parallel system is in a non-charging state (a discharging state or a static standing state), the first processor determines a incorporated battery pack with the largest voltage, and determines whether the absolute value of the difference between the open-circuit voltage of the to-be-incorporated battery pack and the open-circuit voltage of the incorporated battery pack with the largest voltage meets the requirement; and, if the requirement is met, sends a discharging switch closing instruction to the to-be-incorporated battery pack so that the to-be-incorporated battery pack performs a non-charging parallel-connection operation.

In some embodiments of this application, the battery pack in the battery parallel system allows for the temperature of the battery pack when performing the parallel-connection operation. In other words, in order to meet the pre-parallel-connection condition, both the temperature of the to-be-incorporated battery pack and the temperature of the incorporated battery pack need to fall within the first temperature range. The first temperature range may be determined based on a temperature threshold tolerable by the battery cells in the battery pack. For example, the first temperature range may be -25 °C to 70 °C.

The pre-parallel-connection condition additionally includes a temperature condition to ensure that the battery packs operate or undergo the parallel-connection operation within a safe temperature range, thereby improving the safety of the parallel system of the battery packs.

In some embodiments of this application, the battery parallel system operates in two states: a charging state and a non-charging state. The non-charging state includes: a discharging state and a to-be-discharged state. The to-be-discharged state means a state in which the battery parallel system is woken up but does not provide power for the entire vehicle. For example, the key is inserted into the key port of the vehicle to wake up the battery parallel system, the vehicle is not in a travelling state, and the battery pack in the battery parallel system supplies power to other devices of the vehicle, such as the instrument. Understandably, if the battery parallel system is in a charging state, the to-be-incorporated battery pack needs to close the charging switch. If the battery parallel system is in a non-charging state, the to-be-incorporated battery pack needs to close the discharging switch.

The battery parallel system is in a non-charging state, determining the incorporated battery pack of the highest voltage value in the battery parallel system. In this case, if the to-be-incorporated battery pack meets the pre-parallel-connection condition, the first processor transmits a discharging switch closing instruction to the to-be-incorporated battery pack that meets the pre-parallel-connection condition. Therefore, the processor of the to-be-incorporated battery pack controls the discharging switch to close, and the to-be-incorporated battery pack performs the parallel-connection operation.

The battery parallel system is in a charging state, determining the incorporated battery pack of the smallest voltage value in the battery parallel system. In this case, if the to-be-incorporated battery pack meets the pre-parallel-connection condition, the first processor transmits a charging switch closing instruction to the to-be-incorporated battery pack that meets the pre-parallel-connection condition. Therefore, the processor of the to-be-incorporated battery pack controls the charging switch to close, and the to-be-incorporated battery pack performs the parallel-connection operation.

In some embodiments of this application, based on the parameters of the battery pack, the first processor determines whether the to-be-incorporated battery pack and the incorporated battery pack meet the pre-parallel-connection condition. When the pre-parallel-connection condition includes a plurality of conditions, if the to-be-incorporated battery pack fails to meet one or more pre-parallel-connection conditions, it is determined that the to-be-incorporated battery pack fails to meet the pre-parallel-connection condition.

For the to-be-incorporated battery pack that fails to meet the pre-parallel-connection condition, the first processor sets a mechanism by which the to-be-incorporated battery pack is re-evaluated for parallel connection at intervals. The first processor determines, at intervals of a first period T1, whether the to-be-incorporated battery pack meets the pre-parallel-connection conditions. If the to-be-incorporated battery pack fails to meet one or more pre-parallel-connection conditions, the first processor re-determines, after an interval of the first period T1, whether the to-be-incorporated battery pack that previously fails to meet the pre-parallel-connection condition meets the pre-parallel-connection condition. If determining that the to-be-incorporated battery pack fails to meet at least one condition, the processor of the master battery pack determines that the to-be-incorporated battery pack fails to meet the pre-parallel-connection condition. The first period T1 may be set based on actual conditions, for example, may be 20 seconds, 1 minute, 5 minutes, and so on, without being particularly limited herein.

In some embodiments of this application, after the to-be-incorporated battery pack and the incorporated battery pack meet the pre-parallel-connection condition, the first processor may determine, based on the current of the battery parallel system, whether the to-be-incorporated battery pack meets the parallel-connection condition. The parallel-connection condition of this application further includes a first parallel-connection condition and a second parallel-connection condition.

In some embodiments of this application, it is determined whether the to-be-incorporated battery pack and the incorporated battery pack meet the first parallel-connection condition. If the to-be-incorporated battery pack and the incorporated battery pack meet the first parallel-connection condition, the first processor sends a switch closing instruction to the to-be-incorporated battery pack.

The first parallel-connection condition includes condition S1, condition A2, and condition A1. The condition A1 is: a current of the battery parallel system is less than or equal to a first current threshold. The condition A2 is: an absolute value of a difference between an open-circuit voltage of the to-be-incorporated battery pack and an open-circuit voltage of the incorporated battery pack is less than a second voltage threshold. In some embodiments of this application, the first voltage threshold is the same as the second voltage threshold. In some other embodiments of this application, the first voltage threshold may be different from the second voltage threshold, without being particularly limited herein. The first current threshold may be set based on actual conditions. For example, the first current threshold is 1 A or 2 A, without being particularly limited herein. The current of the battery parallel system is characterized by a maximum current of the incorporated battery pack in the battery parallel system. As an example, the master battery pack obtains the current of each incorporated battery pack, and uses the maximum current as the current of the battery parallel system.

In some embodiments of this application, the battery parallel system is in a non-charging state, determining the incorporated battery pack of the highest voltage in the battery parallel system. If the to-be-incorporated battery pack and the incorporated battery pack of the highest voltage meet the pre-parallel-connection condition and the first parallel-connection condition, the first processor sends a discharging switch closing instruction to the to-be-incorporated battery pack. Based on the discharging switch closing instruction, the processor of the to-be-incorporated battery pack controls the discharging switch to close, and then the processor of the to-be-incorporated battery pack controls the charging switch to close, thereby completing the parallel-connection operation.

The battery parallel system is in a charging state, determining the incorporated battery pack of the lowest voltage in the battery parallel system. If the to-be-incorporated battery pack and the incorporated battery pack of the lowest voltage meet the pre-parallel-connection condition and the first parallel-connection condition, the first processor sends a charging switch closing instruction to the to-be-incorporated battery pack. Based on the charging switch closing instruction, the processor of the to-be-incorporated battery pack controls the charging switch to close, and then the processor of the to-be-incorporated battery pack controls the discharging switch to close, thereby completing the parallel-connection operation.

In some embodiments of this application, after the first processor determines that the to-be-incorporated battery pack and the incorporated battery pack meet the pre-parallel-connection condition, the first processor determines whether the to-be-incorporated battery pack and the incorporated battery pack meet a second parallel-connection condition. The second parallel-connection condition includes: condition B1: a current of the battery parallel system is greater than a first current threshold; condition B2: a current of each of the to-be-incorporated battery packs is greater than a second current threshold; and condition B3: a current difference between the current of the to-be-incorporated battery pack and the current of the battery parallel system is less than or equal to a third current threshold. The second current threshold and the third current threshold may be determined based on actual conditions, without being particularly limited herein.

In some embodiments of this application, the battery parallel system is in a non-charging state, determining the incorporated battery pack of the highest voltage in the battery parallel system. If the to-be-incorporated battery pack and the incorporated battery pack of the highest voltage meet the pre-parallel-connection condition and the second parallel-connection condition, the first processor sends a discharging switch closing instruction to the to-be-incorporated battery pack. Based on the discharging switch closing instruction, the processor of the to-be-incorporated battery pack controls the discharging switch to close, and then the processor of the to-be-incorporated battery pack controls the charging switch to close, thereby completing the parallel-connection operation.

The battery parallel system is in a charging state, determining the incorporated battery pack of the lowest voltage in the battery parallel system. If the to-be-incorporated battery pack and the incorporated battery pack of the lowest voltage meet the pre-parallel-connection condition and the second parallel-connection condition, the first processor sends a charging switch closing instruction to the to-be-incorporated battery pack. Based on the charging switch closing instruction, the processor of the to-be-incorporated battery pack controls the charging switch to close, and then the processor of the to-be-incorporated battery pack controls the discharging switch to close, thereby completing the parallel-connection operation.

In some embodiments of this application, after the first processor determines that the to-be-incorporated battery pack and the incorporated battery pack fail to meet the first parallel-connection condition or the second parallel-connection condition, the first processor determines, at intervals of a second period T2, whether the to-be-incorporated battery pack meets the pre-parallel-connection condition. The second period T2 may be set based on actual conditions, for example, may be 30 seconds, 1 minute, 2 minutes, and so on, without being particularly limited herein.

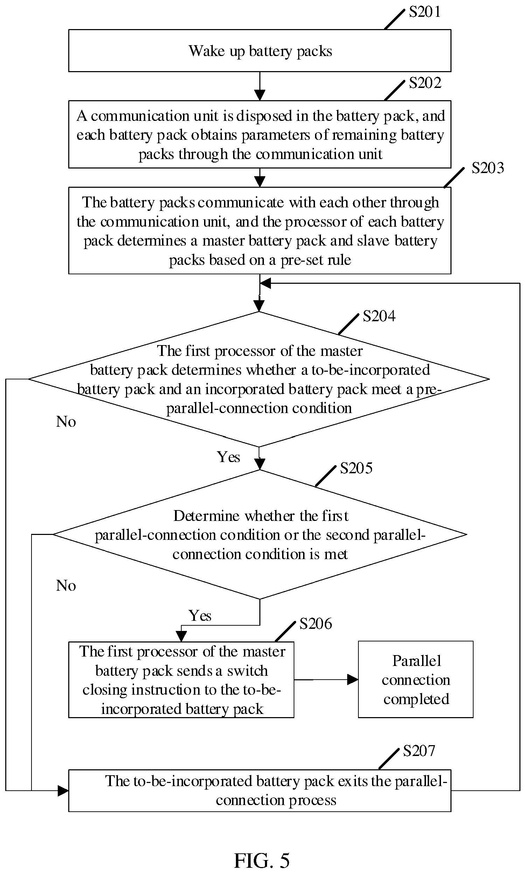

Based on the above embodiment, as shown in FIG. 5, a parallel-connection process of the battery parallel system is as follows:
S201: Waking up battery packs.

A first operation that wakes up the battery management system is applied to the battery pack. The battery management system of the battery pack is woken up in response to the first operation.

S202: A communication unit is disposed in the battery pack, and each battery pack obtains parameters of the remaining battery packs through the communication unit. The parameters of the battery packs include one or more of current, voltage, resistance, temperature, or switch status.

S203: The battery packs communicate with each other through the communication unit, and the processor of each battery pack determines a master battery pack and slave battery packs based on a pre-set rule.

For example, the master battery pack may be determined based on the assigned address of the battery pack. As an example, each battery pack is addressed. After an address is assigned successfully, the battery pack with the smallest address or the largest address is used as a master battery pack, and the other battery packs are slave battery packs.

S204: The first processor of the master battery pack determines whether a to-be-incorporated battery pack and an incorporated battery pack meet a pre-parallel-connection condition. If the pre-parallel-connection condition is met, the process proceeds to step S205; or, if the pre-parallel-connection condition is not met, the process proceeds to step S207.

The pre-parallel-connection condition includes: condition S1: the to-be-incorporated battery pack triggers no fault and the incorporated battery pack triggers no fault; condition S2: an absolute value of a difference between an open-circuit voltage of the to-be-incorporated battery pack and an open-circuit voltage of the incorporated battery pack is less than a first voltage threshold; and condition S3: a temperature of the to-be-incorporated battery pack falls within a first temperature range, and a temperature of the incorporated battery pack falls within the first temperature range. In some embodiments of this application, the temperature of the to-be-incorporated battery pack is characterized by an extreme temperature of a battery cell in the battery pack, and the temperature of the incorporated battery pack is characterized by an extreme temperature of a battery cell in the battery pack.

S205: Determining whether the first parallel-connection condition or the second parallel-connection condition is met; if the first parallel-connection condition or the second parallel-connection condition is met, the process proceeds to step S206; or, if neither the first parallel-connection condition nor the second parallel-connection condition is met, the process proceeds to step S207.

The first parallel-connection condition includes: condition A1: the current of the battery parallel system is less than or equal to a first current threshold; condition S1: the to-be-incorporated battery pack triggers no fault and the incorporated battery pack triggers no fault; and condition A2: an absolute value of a difference between an open-circuit voltage of the to-be-incorporated battery pack and an open-circuit voltage of the incorporated battery pack is less than a second voltage threshold. The current of the battery parallel system is characterized by a maximum current in the battery parallel system.

The second parallel-connection condition includes: condition B1: a current of the battery parallel system is greater than a first current threshold; condition B2: a current of each of the to-be-incorporated battery packs is greater than a second current threshold; and condition B3: a current difference between the current of the to-be-incorporated battery pack and the current of the battery parallel system is less than or equal to a third current threshold. The current of the battery parallel system is characterized by a maximum current in the battery parallel system.

S206: The first processor of the master battery pack sends a switch closing instruction to the to-be-incorporated battery pack.

The to-be-incorporated battery pack closes the charging switch and the discharging switch to complete the parallel connection.

S207: The to-be-incorporated battery pack exits the parallel-connection process.

This application further provides a battery parallel-connection method. The method is applied to an electronic device that provides a battery parallel-connection service, such as a battery management device, a personal computer, or a server. A communication unit and a processor are disposed in the battery pack in an embodiment of this application. The method includes:

Waking up battery packs before the battery packs are connected in parallel, and optionally, applying a first operation to the battery packs, where the first operation is to wake up a battery management system. The awakened battery packs communicate with each other through the communication unit. Each battery pack obtains parameters of the remaining battery packs through the communication unit. The parameters of the battery packs include one or more of current, voltage, resistance, temperature, or switch status.

After the parameters of the remaining battery packs are obtained, the processor of each battery pack determines a master battery pack and slave battery packs based on a pre-set rule. Understandably, each battery pack may determine the master battery pack and the slave battery packs first based on the preset rule, and then exchanges the parameters of the battery packs through the communication unit.

The master battery pack is configured to perform parallel-connection management on the to-be-incorporated battery packs. For each to-be-incorporated battery pack, the first processor of the master battery pack may obtain the parameters of the to-be-incorporated battery pack and the parameters of the incorporated battery pack. Based on the fault status of the to-be-incorporated battery pack and the incorporated battery pack, the open-circuit voltage of the to-be-incorporated battery pack, and the open-circuit voltage of the incorporated battery pack, the first processor determines whether the to-be-incorporated battery pack meets the following conditions: condition S1: the to-be-incorporated battery pack triggers no fault and the incorporated battery pack triggers no fault; condition S2: the absolute value of the difference between the open-circuit voltage of the to-be-incorporated battery pack and the open-circuit voltage of the incorporated battery pack is less than the first voltage threshold. In some embodiments of this application, the open-circuit voltage of the incorporated battery pack is a minimum open-circuit voltage or a maximum open-circuit voltage in the battery parallel system. If the to-be-incorporated battery pack and the incorporated battery pack meet the condition S1 and the condition S2, the first processor of the master battery pack sends a switch closing instruction to the to-be-incorporated battery pack. The to-be-incorporated battery pack performs a parallel-connection operation. In an example, if the to-be-incorporated battery pack fails to meet at least one of the condition S1 or the condition S2, the to-be-incorporated battery pack exits the parallel-connection process.

The open-circuit voltage of the battery pack is determined based on a terminal voltage of the battery pack, a direct-current internal resistance of the battery pack, a polarization internal resistance, and a current of the battery pack. The terminal voltage of the battery pack is collected by an Analog Front End (AFE). The open-circuit voltage of the battery pack is calculated based on the direct-current internal resistance, polarization internal resistance, and current of the battery pack.

The open-circuit voltage of the battery pack is used as a basis for determining the parallel-connection operation of the battery pack, thereby allowing for the impact of the resistance of the battery pack on the voltage of the battery pack, and more accurately reflecting an actual voltage difference between the battery packs.

In some embodiments of this application, for the to-be-incorporated battery pack that fails to meet the pre-parallel-connection condition, the first processor sets a mechanism by which the to-be-incorporated battery pack is re-evaluated for parallel connection at intervals. The first processor determines, at intervals of a first period T1, whether the to-be-incorporated battery pack meets the pre-parallel-connection conditions. If the to-be-incorporated battery pack fails to meet one or more pre-parallel-connection conditions, the first processor re-determines, after an interval of the first period T1, whether the to-be-incorporated battery pack that previously fails to meet the pre-parallel-connection condition meets the pre-parallel-connection condition. If determining that the to-be-incorporated battery pack fails to meet one or more of the pre-parallel-connection conditions, the first processor of the master battery pack determines that the to-be-incorporated battery pack fails to meet the pre-parallel-connection condition. The first period T1 may be set based on actual conditions, for example, may be 20 seconds, 1 minute, 5 minutes, and so on, without being particularly limited herein.

In some embodiments of this application, if the battery parallel system is in a charging state and none of the battery packs triggers a fault, the first processor of the master battery pack determines a incorporated battery pack with the lowest voltage, and determines whether the absolute value of the difference between the open-circuit voltage of the to-be-incorporated battery pack and the open-circuit voltage of the incorporated battery pack with the lowest voltage meets the requirement; and, if the requirement is met, sends a charging switch closing instruction to the to-be-incorporated battery pack so that the to-be-incorporated battery pack performs a charging parallel-connection operation. If the requirement is not met, the to-be-incorporated battery pack exits the parallel-connection process.

In some other embodiments of this application, if the battery parallel system is in a non-charging state (a discharging state or a to-be-discharged state) and none of the battery packs triggers a fault, the first processor determines a incorporated battery pack with the largest voltage, and determines whether the absolute value of the difference between the open-circuit voltage of the to-be-incorporated battery pack and the open-circuit voltage of the incorporated battery pack with the largest voltage meets the requirement; and, if the requirement is met, sends a discharging switch closing instruction to the to-be-incorporated battery pack so that the to-be-incorporated battery pack performs a non-charging parallel-connection operation.

In some embodiments of this application, the battery pack in the battery parallel system allows for the temperature of the battery pack when performing the parallel-connection operation. In other words, the pre-parallel-connection condition also includes a temperature-based condition, and both the temperature of the to-be-incorporated battery pack and the temperature of the incorporated battery pack are required to fall within the first temperature range. The first temperature range may be determined based on a temperature threshold tolerable by the battery cells in the battery pack. For example, the first temperature range may be -25 °C to 70 °C.

In some embodiments of this application, based on the parameters of the battery pack, the first processor determines whether the to-be-incorporated battery pack and the incorporated battery pack meet the pre-parallel-connection condition. When the pre-parallel-connection condition includes a plurality of conditions, if the to-be-incorporated battery pack fails to meet one or more pre-parallel-connection conditions, it is determined that the to-be-incorporated battery pack fails to meet the pre-parallel-connection condition.

The pre-parallel-connection condition additionally includes a temperature condition to ensure that the battery packs operate or undergo the parallel-connection operation within a safe temperature range, thereby improving the safety of the parallel system of the battery packs.

In some embodiments of this application, after the to-be-incorporated battery pack and the incorporated battery pack meet the pre-parallel-connection condition, the first processor may determine, based on the current of the battery parallel system, whether the to-be-incorporated battery pack meets the parallel-connection condition. The parallel-connection condition of this application further includes a first parallel-connection condition and a second parallel-connection condition.

In some embodiments of this application, the first parallel-connection condition required to be met by the to-be-incorporated battery pack and the incorporated battery pack includes: condition A1: the current of the battery parallel system is less than or equal to a first current threshold; condition S1: the to-be-incorporated battery pack triggers no fault and the incorporated battery pack triggers no fault; and condition A2: an absolute value of a difference between an open-circuit voltage of the to-be-incorporated battery pack and an open-circuit voltage of the incorporated battery pack is less than a second voltage threshold. If the to-be-incorporated battery pack and the incorporated battery pack meet the condition A1, the condition S1, and the condition A2, the first processor sends a switch closing instruction to the to-be-incorporated battery pack. In an example, if one condition is not met, the to-be-incorporated battery pack exits the parallel-connection process. The processor of the master battery pack uses the maximum current in the battery parallel system as the current of the battery parallel system.

In some embodiments of this application, the second parallel-connection condition required to be met by the to-be-incorporated battery pack and the incorporated battery pack includes: condition B1: a current of the battery parallel system is greater than a first current threshold; condition B2: a current of each of the to-be-incorporated battery packs is greater than a second current threshold; and condition B3: a current difference between the current of the to-be-incorporated battery pack and the current of the battery parallel system is less than or equal to a third current threshold. If the to-be-incorporated battery pack and the incorporated battery pack meet the condition B1, the condition B2, and the condition B3, the first processor sends a switch closing instruction to the to-be-incorporated battery pack. In an example, if one condition is not met, the to-be-incorporated battery pack exits the parallel-connection process. The processor of the master battery pack uses the maximum current in the battery parallel system as the current of the battery parallel system.

In some embodiments of this application, the battery parallel system is in a non-charging state, determining the incorporated battery pack of the highest voltage in the battery parallel system. If the to-be-incorporated battery pack and the incorporated battery pack of the highest voltage meet the pre-parallel-connection condition and the first parallel-connection condition, the first processor sends a discharging switch closing instruction to the to-be-incorporated battery pack. Based on the discharging switch closing instruction, the processor of the to-be-incorporated battery pack controls the discharging switch to close, and then the processor of the to-be-incorporated battery pack controls the charging switch to close, thereby completing the parallel-connection operation.

Alternatively, the battery parallel system is in a charging state, determining the incorporated battery pack of the lowest voltage in the battery parallel system. If the to-be-incorporated battery pack and the incorporated battery pack of the lowest voltage meet the pre-parallel-connection condition and the first parallel-connection condition, the first processor sends a charging switch closing instruction to the to-be-incorporated battery pack. Based on the charging switch closing instruction, the processor of the to-be-incorporated battery pack controls the charging switch to close, and then the processor of the to-be-incorporated battery pack controls the discharging switch to close, thereby completing the parallel-connection operation.

In some embodiments of this application, after the first processor determines that the to-be-incorporated battery pack and the incorporated battery pack fail to meet the first parallel-connection condition or the second parallel-connection condition, the first processor determines, at intervals of a second period T2, whether the to-be-incorporated battery pack meets the pre-parallel-connection condition. The first period T2 may be set based on actual conditions, for example, may be 30 seconds, 1 minute, 2 minutes, and so on, without being particularly limited herein.

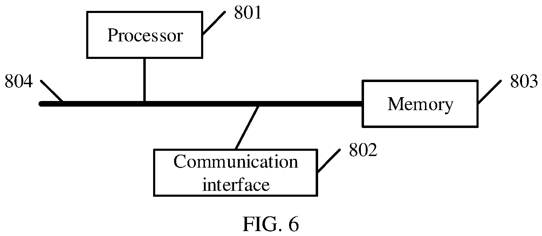

An embodiment of this application further provides an electronic device. As shown in FIG. 6, the electronic device includes a processor 801, a communication interface 802, a memory 803, and a communication bus 804. The processor 801, the communication interface 802, and the memory 803 communicate with each other through the communication bus 804.

The memory 803 is configured to store a computer program.

When executing the program stored in the memory 803, the processor 801 is configured to implement the following steps:
waking up N battery packs;
obtaining parameters of the N battery packs, and determining a master battery pack and remaining N-1 slave battery packs from the N battery packs, where the parameters of the battery packs include one or more of current, voltage, resistance, temperature, or switch status, and the master battery pack includes a first processor; and
determining, by the first processor, whether a to-be-incorporated battery pack and an incorporated battery pack meet a pre-parallel-connection condition, and sending a switch closing instruction to the to-be-incorporated battery pack when it is determined that the to-be-incorporated battery pack and the incorporated battery pack meet the pre-parallel-connection condition.

The pre-parallel-connection condition includes:
condition S1: the to-be-incorporated battery pack triggers no fault, and the incorporated battery pack triggers no fault; and
condition S2: an absolute value of a difference between an open-circuit voltage of the to-be-incorporated battery pack and an open-circuit voltage of the incorporated battery pack is less than a first voltage threshold.

The open-circuit voltage of the incorporated battery pack is a minimum open-circuit voltage or a maximum open-circuit voltage in the battery parallel system.

Another embodiment of this application further provides a computer-readable storage medium. The computer-readable storage medium stores a computer program. When executed by a processor, the computer program implements the steps of the battery parallel-connection method in any one of the battery parallel systems.

Another embodiment of this application further provides a computer program product that includes an instruction. When the instruction is run on a computer, the computer is caused to implement the battery parallel-connection method in a battery parallel system according to any one of the above embodiments.

The foregoing embodiments may be implemented fully or partially by software, hardware, firmware, or any combination thereof. When implemented by software, the embodiment may be fully or partially implemented in the form of a computer program product. The computer program product includes one or more computer instructions. When the computer program instructions are loaded and executed on the computer, the processes or functions described in the embodiments of this application are implemented in full or in part. The computer may be a general-purpose computer, a dedicated computer, a computer network, or other programmable devices. The computer instructions may be stored in a computer-readable storage medium or transmitted from one computer-readable storage medium to another. For example, the computer instructions may be transmitted from a website, computer, server, or data center to another website, computer, server, or data center in a wired (such as a coaxial cable, optical fiber, or digital subscriber line (DSL)) or wireless (such as infrared, radio, or microwave) manner. The computer-readable storage medium may be any available medium accessible to a computer, or a data storage device such as a server or data center that integrates one or more available media. The available media may be a magnetic medium (such as a floppy disk, a hard disk, or a magnetic tape), an optical medium (such as a DVD), or a semiconductor medium (such as a solid state disk (SSD)).

Different embodiments of this application are described in a correlative manner. For the same or similar part in one embodiment, reference may be made to another embodiment. Each embodiment focuses on differences from other embodiments. In particular, the embodiments of the method, computer-readable storage medium, and instruction-containing computer program product are substantially similar to the device embodiment, and therefore, are described briefly, and the relevant sections may be learned by referring to the description of the corresponding sections in the device embodiment.

What is described above is merely preferred embodiments of this application, but not intended to limit the protection scope of this application. Any modifications, equivalent replacements, improvements, and the like made without departing from the principles of this application still fall within the protection scope of this application.

## Claims

1. A battery parallel-connection method, **characterized in that** the method comprises:
waking up N battery packs;
obtaining parameters of the N battery packs, and determining a master battery pack and remaining N-1 slave battery packs from the N battery packs, wherein the parameters of the battery packs comprise one or more of current, voltage, resistance, temperature, or switch status, and the master battery pack comprises a first processor; and
determining, by the first processor, whether a to-be-incorporated battery pack and an incorporated battery pack meet a pre-parallel-connection condition, and sending a switch closing instruction to the to-be-incorporated battery pack when it is determined that the to-be-incorporated battery pack and the incorporated battery pack meet the pre-parallel-connection condition, wherein the pre-parallel-connection condition comprises:
a condition S1: the to-be-incorporated battery pack triggers no fault, and the incorporated battery pack triggers no fault, and
a condition S2: an absolute value of a difference between an open-circuit voltage of the to-be-incorporated battery pack and an open-circuit voltage of the incorporated battery pack is less than a first voltage threshold; and
the open-circuit voltage of the incorporated battery pack is a minimum open-circuit voltage or a maximum open-circuit voltage in a battery parallel system.

2. The battery parallel-connection method according to claim 1, **characterized in that**,
in response to the battery parallel system being in a charging state, determining that the open-circuit voltage of the incorporated battery pack is a minimum open-circuit voltage of the incorporated battery pack; or,
in response to the battery parallel system being in a non-charging state, determining that the open-circuit voltage of the incorporated battery pack is a maximum open-circuit voltage of the incorporated battery pack.

3. The battery parallel-connection method according to claim 1 or 2, **characterized in that**, the pre-parallel-connection condition further comprises:
determining that whether the to-be-incorporated battery pack and the incorporated battery pack meet a condition S3;
wherein the condition S3: a temperature of the to-be-incorporated battery pack falls within a first temperature range, and a temperature of the incorporated battery pack falls within the first temperature range; and
the temperature of the to-be-incorporated battery pack is represented by the highest or lowest temperature of a battery cell in the battery pack, and the temperature of the incorporated battery pack is represented by an the highest or lowest temperature of a battery cell in the battery pack.

4. The battery parallel-connection method according to any one of claims 1-3, **characterized in that** ,
in response to the battery parallel system is in a non-charging state, and the to-be-incorporated battery pack and the incorporated battery pack meet the pre-parallel-connection condition, transmitting a discharging switch closing instruction to the to-be-incorporated battery pack; or,
in response to the battery parallel system is in a charging state, and the to-be-incorporated battery pack and the incorporated battery pack meet the pre-parallel-connection condition, transmitting a charging switch closing instruction to the to-be-incorporated battery pack.

5. The battery parallel-connection method according any one of claims 1-3, **characterized in that**,
in response to the to-be-incorporated battery pack and the incorporated battery pack failing to meet the pre-parallel-connection condition, determining at intervals of a first period T1, whether the to-be-incorporated battery pack meets the pre-parallel-connection condition; or, determining at intervals of the first period T1, whether the to-be-incorporated battery pack and the incorporated battery pack meet the pre-parallel-connection condition.

6. The battery parallel-connection method according to claim 4, **characterized in that**,
determining whether the to-be-incorporated battery pack and the incorporated battery pack meet a first parallel-connection condition;
wherein, the first parallel-connection condition comprises:
a condition A1: a current of the battery parallel system is less than or equal to a first current threshold;
the condition S1;
a condition A2: an absolute value of a difference between an open-circuit voltage of the to-be-incorporated battery pack and an open-circuit voltage of the incorporated battery pack is less than a second voltage threshold;
the current of the battery parallel system is a maximum current in the battery parallel system.

7. The battery parallel-connection method according to claim 4, **characterized in that**
determining whether the to-be-incorporated battery pack and the incorporated battery pack meet a second parallel-connection condition;
the second parallel-connection condition comprises:
a condition B1: a current of the battery parallel system is greater than a first current threshold;
a condition B2: a current of each of the to-be-incorporated battery packs is greater than a second current threshold;
a condition B3: a current difference between the current of the to-be-incorporated battery pack and the current of the battery parallel system is less than or equal to a third current threshold;
the current of the battery parallel system is a maximum current in the battery parallel system.

8. The battery parallel-connection method according to claim 6 or 7, **characterized in that**
in response to the battery parallel system is in a non-charging state, and the to-be-incorporated battery pack and the incorporated battery pack meet the first parallel-connection condition or the second parallel-connection condition, transmitting a charging switch closing instruction to the to-be-incorporated battery pack; or,
in response to the battery parallel system is in a charging state, the to-be-incorporated battery pack and the incorporated battery pack meet the first parallel-connection condition or the second parallel-connection condition, transmitting a discharging switch closing instruction to the to-be-incorporated battery pack.

9. The battery parallel-connection method according to claim 6 or 7, **characterized in that**
in response to the to-be-incorporated battery pack and the incorporated battery pack failing to meet the first parallel-connection condition or the second parallel connection condition, determining at intervals of a second period T2, whether the to-be-incorporated battery pack meets the pre-parallel-connection condition; or, determining at intervals of a second period T2, whether the to-be-incorporated battery pack and the incorporated battery pack meet the pre-parallel-connection condition.

10. A battery parallel system, comprising:
a plurality battery packs, comprising a to-be-incorporated battery pack and an incorporated battery pack; and each the battery pack comprises a discharging switch and a charging switch; **characterized in that**, the battery parallel-connection method according to any one of claims 1-9 is implemented.

11. An electronic device, **characterized in that** the battery parallel-connection method according to any one of claims 1-9 is implemented.
